(19) Europäisches Patentamt
European Patent Office
Office européen des brevets

(11) **EP 4 049 542 A1**

(12) **EUROPEAN PATENT APPLICATION**
published in accordance with Art. 153(4) EPC

(43) Date of publication:
**31.08.2022 Bulletin 2022/35**

(21) Application number: **20879163.2**

(22) Date of filing: **23.09.2020**

(51) International Patent Classification (IPC):
**A23L 19/00** (2016.01) **A23B 7/005** (2006.01)

(52) Cooperative Patent Classification (CPC):
**A23B 7/005; A23L 19/00**

(86) International application number:
**PCT/JP2020/035845**

(87) International publication number:
**WO 2021/079674 (29.04.2021 Gazette 2021/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.10.2019 JP 2019193621**

(71) Applicant: **Sanyo Foods Co., Ltd.**
**Minato-ku, Tokyo 107-0052 (JP)**

(72) Inventors:
• **NAGAYAMA, Yoshiaki**
**Tokyo 107-0052 (JP)**
• **ONOZAWA, Toru**
**Tokyo 107-0052 (JP)**

(74) Representative: **Ricker, Mathias**
**Wallinger Ricker Schlotter Tostmann**
**Patent- und Rechtsanwälte Partnerschaft mbB**
**Zweibrückenstrasse 5-7**
**80331 München (DE)**

(54) **METHOD FOR PRODUCING FRIED VEGETABLE FOOD PRODUCT AND FRIED VEGETABLE FOOD PRODUCT**

(57) Provided are: a method for producing a noodle-like fried vegetable food product which is effectively prevented from damage such as cracking and breaking in a packaging step in the process of production of the noodle-like fried vegetable or during transportation and which, when reconstituted with hot water, has the texture of the original vegetable and can be eaten like noodles; and such a noodle-like fried vegetable food product. A method for producing a noodle-like fried vegetable food product according to one embodiment comprises: forming a noodle-like vegetable by cutting a vegetable into a noodle-like shape; providing an oil frying container provided with a retainer; placing the noodle-like vegetable in the retainer of the oil frying container to form a mass of the noodle-like vegetable; and frying the noodle-like vegetable mass placed in the retainer with oil. The method further comprises compressing the noodle-like vegetable mass in the middle of the frying of the noodle-like vegetable mass with oil or immediately after the frying with oil.

FIG. 1

**Description**

FIELD

The present disclosure relates to a method for producing a fried vegetable food product and a fried vegetable food product.

BACKGROUND

Instant cup noodles as noodle-shaped food products are known. Furthermore, instant cup soups containing noodles, such as cellophane noodles, are also known.

Fried vegetable food products in which a vegetable is cut into a noodle-like shape and fried in oil are known. For example, Patent Literature 1 (JP 2016-032442 A) describes a noodle-shaped fried vegetable in which a vegetable which has been cut to a size of 1 to 3 mm in thickness, 1 to 3 mm in width, and 30 to 300 mm in length is fried in oil in a frying mold so that the noodle-shaped fried vegetable assumes a shape like a noodle mass of Chinese noodles.

[CITATION LIST]

[PATENT LITERATURE]

[PTL 1] JP 2016-032442 A

SUMMARY

[TECHNICAL PROBLEM]

The noodle-shaped fried vegetable described in Patent Literature 1 is provided as a noodle mass having an appearance and texture similar to that of Chinese fried noodles, and can be eaten as-is so as to enable enjoyment of a crispy texture.

Such a noodle shape fried vegetable is fragile and likely to crack because the shape thereof is elongated and it lacks flexibility. Thus, when the fried vegetable is contained in a cup and commercialized as a food product to be eaten by reconstitution in hot water, in the same manner as cup noodle food products, such as instant cup noodles or instant cup soup, frequent chipping or cracking of the fried vegetable occurs during the packaging process of the manufacture thereof or during the transportation of the product. Fried vegetables that have cracked and shortened can no longer be eaten like noodles when reconstituted in hot water, which significantly reduces the commercial value thereof.

As a method for preventing the chipping or cracking of fried vegetables, it is possible to cut the vegetables thickly at the time of cutting into a noodle shape. However, if the thickness of the cut vegetables increases, the frying time becomes longer, which may cause burning, and reconstitution in hot water tends to be deteriorated.

The present disclosure provides a method for producing a noodle-shaped fried vegetable food product with which it is possible to effectively suppress the occurrence of defects, such as chips and cracks during the packaging process of the manufacture or during the transportation of a vegetable which has been fried in a noodle-like shape, and with which, upon reconstitution in hot water, the original texture of the vegetable and the ability to be eaten like noodles are retained, as well as such a noodle-shaped fried vegetable food product. Note that in the present disclosure, "chipping" and "cracking" mean that a relatively elongate food product having a noodle-like shape is damaged, and the food product has defects which prevent maintenance of the elongated shape, which differs from so-called "shape loss" in which a piece of food product disengages from a compacted mass of relatively small food pieces.

[SOLUTION TO PROBLEM]

The present invention encompasses embodiments [1] to [14] below.

[1] A method for producing a noodle-shaped fried vegetable food product, the method comprising:

cutting a vegetable into a noodle shape to form a noodle-shaped vegetable,
providing a frying container comprising a retainer,
forming a mass of the noodle-shaped vegetable by containing the noodle-shaped vegetable in the retainer of the frying container, and
frying the mass of the noodle-shaped vegetable contained in the retainer, the method further comprising:

compressing the mass of the noodle-shaped vegetable during or immediately after frying of the mass of the noodle-shaped vegetable.

[2] The method according to [1], further comprising, prior to frying the mass of the noodle-shaped vegetable, immersing the noodle-shaped vegetable in an immersion treatment liquid comprising sugar and salt.

[3] The method according to [1] or [2], wherein the frying container further comprises a pressing means, the method further comprising compressing the mass of the noodle-shaped vegetable by the pressing means.

[4] The method according to any one of [1] to [3], further comprising, after frying the mass of the noodle-shaped vegetable, maintaining the mass of the noodle-shaped vegetable in a compressed state and cooling the mass of the noodle-shaped vegetable.

[5] The method according to any one of [1] to [4], wherein a length of the noodle-shaped vegetable prior to frying is 80 mm to 500 mm, a width thereof is 1.0 mm to 15 mm, and a thickness thereof is 0.8 mm to 5 mm.

[6] The method according to any one of [1] to [5], wherein the vegetable is a root vegetable.

[7] The method according to any one of [1] to [6], further comprising, after frying the mass of the noodle-shaped vegetable, containing the mass of the noodle-shaped vegetable in a cup container.

[8] The method according to [7], further comprising, after frying the mass of the noodle-shaped vegetable and before containing the mass of the noodle-shaped vegetable in the cup container, individually wrapping the mass of the noodle-shaped vegetable.

[9] The method according to any one of [1] to [8], further comprising, after containing the noodle-shaped vegetable in the retainer of the frying container and before frying the mass of the noodle-shaped vegetable, providing the mass of the noodle-shaped vegetable with one or more cavities penetrating the thickness direction of the mass of the noodle-shaped vegetable.

[10] The method according to any one of [1] to [9], wherein the noodle-shaped fried vegetable food product is a food product which is cooked to a state suitable for consumption by adding hot water.

[11] A noodle-shaped fried vegetable food product comprising a fried mass of a noodle-shaped vegetable, wherein a length of the noodle-shaped vegetable is 80 mm to 500 mm, a width thereof is 1.0 mm to 15 mm, and a thickness thereof is 0.8 mm to 5 mm, and a density of the mass of the noodle-shaped vegetable is 0.25 g/cm$^3$ to 1.0 g/cm$^3$.

[12] The noodle-shaped fried vegetable food product according to [11], wherein the mass of the noodle-shaped vegetable has a substantially flat rectangular parallelepiped shape or substantially disc-like shape, the diagonal length of the flat rectangular parallelepiped shape or the diameter of the disc-like shape is 3 cm to 10 cm, and the thickness of the flat rectangular parallelepiped shape or disc-like shape is 0.3 cm to 3 cm.

[13] The noodle-shaped fried vegetable food product according to [11] or [12], which is a food product which is cooked to a state suitable for consumption by adding hot water.

[14] A method for producing a flake-like fried vegetable food product, the method comprising:

cutting a vegetable into a flake-like shape to form a flake-like vegetable,
providing a frying container comprising a retainer,
forming a mass of the flake-like vegetable by containing the flake-like vegetable in the retainer of the frying container, and
frying the mass of the flake-like vegetable contained in the retainer, the method further comprising:
compressing the mass of the flake-like vegetable during or immediately after frying of the mass of the flake-like vegetable.

[ADVANTAGEOUS EFFECTS OF INVENTION]

According to the present invention, there can be provided a method for producing a noodle-shaped fried vegetable food product with which it is possible to effectively suppress the occurrence of defects, such as chips and cracks during the transportation of a vegetable which has been fried in a noodle-like shape, and with which, upon reconstitution in hot water, the original texture of the vegetable and the ability to be eaten like noodles are retained, and there can be provided such a noodle-shaped fried vegetable food product.

The target of the method of the present disclosure is not limited to noodle-shaped vegetables. For example, by applying the method of the present disclosure to a flake-like vegetable, a flake-like fried vegetable food product can be produced.

The above descriptions do not disclose all embodiments of the present invention and all of the advantages of the present invention.

BRIEF DESCRIPTIONS OF DRAWINGS

FIG. 1 is an explanatory view of a method for producing a noodle-shaped fried vegetable food product of a first embodiment.
FIG. 2 is an explanatory view of a method for producing a noodle-shaped fried vegetable food product of a second embodiment.

DESCRIPTION OF EMBODIMENTS

Though a detailed description with reference to the drawings is given below in order to exemplify typical embodiments of the present invention, the present invention is not limited to these embodiments. Regarding the reference signs of the drawings, elements which are assigned similar signs in different drawings indicate similar or corresponding elements.

The method for producing a noodle-shaped fried vegetable food product according to an embodiment comprises cutting a vegetable into a noodle shape to form a noodle-shaped vegetable, providing a frying container comprising a retainer, forming a mass of the noodle-shaped vegetable by containing the noodle-shaped vegetable in the retainer of the frying container, and frying the mass of the noodle-shaped vegetable contained in the retainer. The mass of the noodle-shaped vegetable is compressed during or immediately after frying of the mass of the noodle-shaped vegetable.

The vegetable is not particularly limited as long as it is an edible plant which can be cut into a noodle-like shape and cooked by being fried in oil. In the present disclosure, "vegetable" refers to leaves, roots, stems, rhizomes, and fruits. As vegetables, root vegetables, potatoes, and stem vegetables are preferable, and root vegetables are more preferable, since they have a large amount of fiber and are easily processed into a noodle-like shape. Examples of root vegetables include burdock, carrot, radish, turnip, and lotus root. Examples of potatoes include potatoes, sweet potatoes, dioscorea opposita, and taro. Examples of stem vegetables include asparagus, Japanese spikenard, and butterbur.

The vegetable may be cut into a noodle-like shape with the skin thereof maintained, or may be cut into a noodle shape after the skin thereof is removed. A cutter, knife, or peeler can be used to cut the vegetable. The size of the vegetable cut into the noodle-like shape can be appropriately determined depending on the forms of the noodle-shaped fried vegetable food product and the package thereof, the required texture, and the cooking method.

In an embodiment, the length of the noodle-shaped vegetable prior to frying is 80 mm to 500 mm, 100 mm to 300 mm, or 120 mm to 250 mm, the width thereof is 1.0 mm to 15 mm, 1.5 mm to 12 mm, or 2.0 mm to 10 mm, and the thickness thereof is 0.8 mm to 5 mm, 1.0 mm to 4 mm, or 1.5 mm to 3 mm. By setting the length, width, and thickness of the noodle-shaped vegetable before frying to within the above ranges, a noodle-shaped fried vegetable food product which has the texture of noodles when reconstituted in hot water can be provided.

The cross-sectional shape of the cut noodle-shaped vegetable may be any of various shapes, and examples thereof include circular, elliptical, rectangular, triangular, and other polygonal shapes. When the cross-sectional shape of the noodle-shaped vegetable is circular, the width and thickness are the diameter; when it is elliptical, the width is the major axis of the ellipse and the thickness is the minor axis of the ellipse; when it is rectangular, the width is the long side and the thickness is the short side; and when it is triangular, the width is the base and the thickness is the height. For other cross-sectional shapes, the width is the Feret diameter and the thickness is the maximum length in the direction orthogonal to the width.

Depending on the type of vegetable, the cut noodle-shaped vegetable may be pretreated. Examples of the pretreatment include astringency reduction, blanching, discoloration prevention treatment, citric acid treatment, and calcium treatment. The cut noodle-shaped vegetable may be seasoned with salt, pepper, soy sauce, sugar, chili pepper, meat extract, umami seasoning, onion powder, or edible oils and fats.

The noodle-shaped vegetable may be immersed in an immersion treatment liquid before frying of the mass of the noodle-shaped vegetable. The immersion treatment liquid may include, for example, sugars, such as sorbitol, glucose, trehalose, and lactose; seasonings, such as salt, pepper, soy sauce, sugar, chili pepper, meat extract, umami seasoning, onion powder, and edible oils and fats; thickening polysaccharides, such as guar gum, pectin, carrageenan, xanthan gum, pullulan, and gum arabic; grains, such as flour and starch; protein raw materials, such as liquid eggs, powdered eggs, and milk protein; or combinations thereof. The sugars can permeate the cell tissue of the noodle-shaped vegetable and effectively suppress or prevent the cracking of the noodle-shaped vegetable. The noodle-shaped vegetable can be seasoned with the seasoning. The thickening polysaccharides, grains, and protein raw materials can function as a binder between noodle-shaped vegetables and can effectively be used to maintain the shape of the final product.

In an embodiment, the amount of the sugar used is 1 part by mass to 30 parts by mass, preferably 1.5 parts by mass to 20 parts by mass, and more preferably 2 parts by mass to 15 parts by mass with respect to 100 parts by mass of the noodle-shaped vegetable before frying.

The types and amounts of seasonings can be appropriately determined depending on the type of the vegetable and the required seasoning.

In an embodiment, the total amount of thickening polysaccharides, grains, and protein raw materials used is 0.01 parts by mass to 2 parts by mass, preferably 0.015 parts by mass to 1 part by mass, and more preferably 0.02 parts by mass to 0.5 parts by mass with respect to 100 parts by mass of the noodle-shaped vegetable before frying.

In an embodiment, the immersion treatment liquid contains a sugar and salt. In this embodiment, the sugar is preferably sorbitol.

The frying container used in the frying step of the noodle-shaped vegetable comprises a retainer which is able to contain the noodle-shaped vegetable. The shape of the retainer may be any of various shapes, such as a cylindrical shape having a circular bottom surface and a rectangular tubular shape having a rectangular bottom surface. The shape of the bottom surface of the retainer defines the plan-view shape of the noodle-shaped fried vegetable food product. The side walls or bottom surface of the retainer may have a large number of small holes or may be made of a wire mesh, through which frying oil can pass. The diameter or diagonal length of the bottom surface of the retainer can be, for example, 3 cm to 10 cm, 4 cm to 8 cm, or 5 cm to 7 cm. The height (depth) of the retainer can be, for example, 3 cm to 30 cm, 4 cm to 25 cm, or 5 cm to 20 cm.

By containing the noodle-shaped vegetable in the retainer of the frying container, a mass of the noodle-shaped vegetable is formed. The noodle-shaped vegetable is preferably contained in the retainer in such an amount that frying oil circulates through gaps of the mass of the noodle-shaped vegetable and the noodle-shaped vegetable is evenly fried through to the inside of the mass of the noodle-shaped vegetable. For example, the amount of the noodle-shaped vegetable before frying can be 10 g to 30 g or 12 g to 28 g per 100 cm$^3$ of the internal volume of the retainer.

After containing the noodle-shaped vegetable in the retainer of the frying container and before frying of the mass of the noodle-shaped vegetable, one or more cavities which penetrate the thickness of the mass of the noodle-shaped vegetable may be provided in the mass of the noodle-shaped vegetable. For example, by providing one or more protrusions extending vertically from the bottom surface of the retainer, the pressing surface of a pressing means, or both, penetrating cavities can be formed in the mass of the noodle-shaped vegetable when the noodle-shaped vegetable is contained in the retainer. By providing penetrating cavities in the mass of the noodle-shaped vegetable, frying oil can circulate through the penetrating cavities, whereby the mass of the noodle-shaped vegetable can be fried more evenly through to the inside.

The mass of the noodle-shaped vegetable contained in the retainer is fried using an edible oil as the frying oil. Examples of the edible oil include rapeseed oil, palm oil, cottonseed oil, sesame oil, and refined processed fats and oils, and palm oil is preferable. The temperature of the frying oil can be appropriately determined depending on the shape of the noodle-shaped vegetable, in particular, the width and thickness thereof. The temperature of the frying oil can be, for example, 130°C to 200°C, preferably 130°C to 180°C or 150°C to 160°C. The frying time can be appropriately determined depending on the shape of the noodle-shaped vegetable, in particular, the width and thickness thereof, as well as the temperature of the frying oil. The frying time can be, for example, 10 seconds to 10 minutes, preferably 30 seconds to 8 minutes, and more preferably 1 minute to 5 minutes. Frying may be carried out under normal pressure or under reduced pressure.

When frying the noodle-shaped vegetable, dredging may or may not be used. In an embodiment, dredging is not used when frying the noodle-shaped vegetable. Dredging is generally used for cooking fried foods, such as fried chicken, for the purpose of preventing fried food inter-adhesion. Examples of dredging include coating with a starch, such as cornstarch, potato starch, tapioca starch, or chemically modified starches thereof; as well as a wheat flour, such as soft flour, medium-strength flour, and strong flour, and these adhere to the surface of the noodle-shaped vegetable in powder form.

When frying the mass of the noodle-shaped vegetable, the mass of the noodle-shaped vegetable may be pressed from above so as to prevent the mass of the noodle-shaped vegetable from moving upwards in the retainer and overflowing the retainer, or to prevent a part of the noodle-shaped vegetable from protruding from the oil surface of the frying oil. The mass of the noodle-shaped vegetable may be pressed with a drop lid, or a pressing means, which is described later, may be used in place of the lid. As a result, unnecessary swelling or excessive deformation of the noodle-shaped vegetable during frying can be prevented. When holding down the mass of the noodle-shaped vegetable, it is desirable not to compress the mass of the noodle-shaped vegetable but to limit it to the extent that it is constrained by the internal space of the retainer so that frying oil can circulate through the gaps of the mass of the noodle-shaped vegetable, and the noodle-shaped vegetable is evenly fried through to the inside of the mass of the noodle-shaped vegetable.

In a first embodiment, the mass of the noodle-shaped vegetable is compressed during frying of the mass of the noodle-shaped vegetable. "Compressed" means to reduce gaps in the noodle-shaped vegetable and increase the density thereof while substantially maintaining the elongated continuous shape of the noodle-shaped vegetable. By compressing the mass of the noodle-shaped vegetable, the strength of the fried mass of the noodle-shaped vegetable can be increased and the occurrence of cracking during transportation can be suppressed.

The compression can be carried out using a pressing means provided in the frying container. The pressing means is not limited as long as it has a shape which can compress the mass of the noodle-shaped vegetable contained in the retainer. The shape of the pressing means can be a flat plate or a cylindrical object which matches the internal cross-sectional shape of the retainer, and for example, when the retainer is cylindrical having a circular bottom, the pressing means can be disc-shaped or cylindrical, and when the retainer is a rectangular cylinder-shaped retainer having a rectangular bottom surface, the pressing means can be a rectangular plate shape or a rectangular cylinder shape. The pressing means may be composed of a disc-shaped or rectangular plate-shaped pressing surface and a rod-shaped member connected to the pressing surface and extending along the vertical direction of the pressing surface. The pressing means may be composed of a cylinder or a rectangular tube and a rod-shaped member connected to the circular surface or the rectangular surface of the cylinder or the rectangular tube and extending along the vertical direction of the circular surface or the rectangular surface. The pressing means is preferably a cylinder or a rectangular cylinder having a thickness in the depth direction. The pressing surface of the cylindrical or rectangular-cylindrical pressing means can be translated along the retainer's side wall while being maintained parallel to the bottom of the retainer, whereby the mass of the noodle-shaped vegetable can be compressed to a uniform thickness. The pressing means may have a large number of small holes or a wire mesh in the same manner as the retainer. The pressing means can also be used as a holding means (lid) for constraining the mass of the noodle-shaped vegetable in the internal space of the retainer during frying of the mass of the noodle-shaped vegetable.

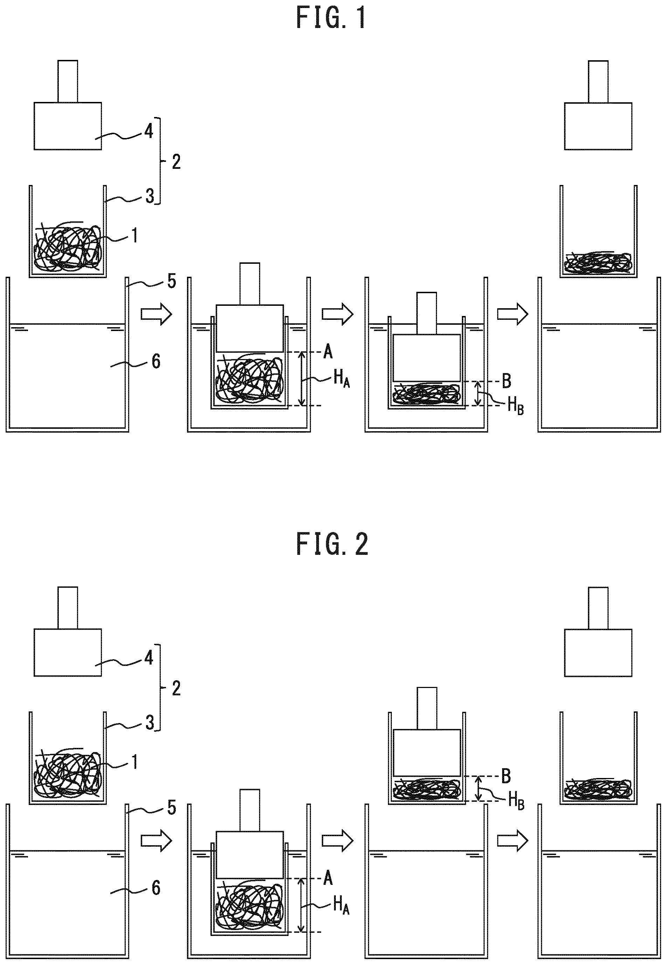

FIG. 1 is an explanatory view of a method for producing a noodle-shaped fried vegetable food product of the first embodiment. The mass of the noodle-shaped vegetable 1 is contained in a retainer 3 of a frying container 2 comprising the retainer 3 and a pressing means 4 (leftmost drawing), and is fried in an oil bath 5 into which frying oil 6 has been introduced in a state in which it is constrained in the internal space of the retainer 3 by the pressing means 4 at a holding position A (second drawing from the left). After a predetermined time has passed during frying, by moving the pressing means 4 to a compression position B, the mass of the noodle-shaped vegetable 1 is compressed (second drawing from the right). Thereafter, frying is completed by pulling up the retainer 3 from the oil bath 5 (rightmost drawings), and the fried and compressed mass of the noodle-shaped vegetable 1 is transferred to a subsequent process, such as packaging.

In an embodiment, the compression is carried out so that the density of the fried mass of the noodle-shaped vegetable is 0.25 g/cm$^3$ to 1.0 g/cm$^3$, 0.27 g/cm$^3$ to 0.95 g/cm$^3$, or 0.3 g/cm$^3$ to 0.9 g/cm$^3$.

In an embodiment, regarding the position of the pressing means, as shown in FIG. 1, the ratio ($H_B/H_A$) of a height $H_B$ from the bottom surface of the retainer to the compression position B with respect to a height $H_A$ from the bottom surface of the retainer to the holding position A is determined appropriately according to the target product thickness of the noodle-shaped fried vegetable food product and the area of the bottom surface of the retainer, and can be, for example, 3% to 20%, 5% to 15%, or 7% to 13%.

The frying container may comprise an adjustment mechanism which is capable of raising and lowering the pressing means for positioning. In an embodiment, the adjustment mechanism can move the pressing means between the holding position A and the compression position B, as well as an open position for loading and unloading the noodle-shaped vegetable, and can fix the pressing means in these positions.

The timing for starting compression is not particularly limited when the compression is carried out in the frying oil. However, though it is possible to compress the mass of the noodle-shaped vegetable immediately after the start of frying, the frying oil tends to be prevented from flowing through the gaps in the mass of the noodle-shaped vegetable, which may increase the frying time, and the frying is also likely to be uneven throughout the mass of the noodle-shaped vegetable. Thus, the compression is preferably started 2 minutes or 1 minute before the end of frying, and may be carried out in the frying oil immediately before the completion of frying, for example, 10 seconds, 5 seconds, or 1 second before.

The compression may be continued after the start of compression until the end of frying, or may be repeated intermittently, for example, several times. It is desirable that the compression be maintained at the time of completion of the frying. This can ensure that the compressed shape of the fried mass of the noodle-shaped vegetable can be maintained at room temperature.

After frying the mass of the noodle-shaped vegetable, it is preferable to maintain the compressed state of the mass of the noodle-shaped vegetable and cool the mass of the noodle-shaped vegetable. This makes it possible to more reliably maintain the compressed shape of the fried mass of the noodle-shaped vegetable at room temperature. The compressed state is preferably maintained until the mass of the noodle-shaped vegetable is cooled to 80°C or lower, preferably 60°C or lower.

In a second embodiment, the mass of the noodle-shaped vegetable is compressed immediately after the completion of the frying of the mass of the noodle-shaped vegetable. By compressing the mass of the noodle-shaped vegetable, the strength of the fried mass of the noodle-shaped vegetable can be increased and the occurrence of cracking during transportation can be suppressed. In the present disclosure, the term "completion of the frying" is defined as a time point when the retainer is completely withdrawn from the frying oil.

FIG. 2 is an explanatory view of a method for producing a noodle-shaped fried vegetable food product of the second embodiment. The mass of the noodle-shaped vegetable 1 is contained in a retainer 3 of a frying container 2 comprising the retainer 3 and a pressing means 4 (leftmost drawing), and is fried in an oil bath 5 into which frying oil 6 has been introduced in a state in which it is constrained in the internal space of the retainer 3 by the pressing means 4 at a holding position A (second drawing from the left). After the completion of the frying, the retainer 3 is pulled up from the oil bath 5 and immediately thereafter the pressing means 4 is moved to a compression position B, and the mass of the noodle-shaped vegetable 1 is compressed (second drawing from the right). After a predetermined time has lapsed, the compressed state is released (rightmost drawing), and the fried and compressed mass of the noodle-shaped vegetable 1 is transferred to a subsequent process, such as packaging.

The compression can be carried out using the pressing means as described in the first embodiment. In the same manner as the first embodiment, the pressing means can also be used as a holding means for constraining the mass of the noodle-shaped vegetable in the internal space of the retainer when frying the mass of the noodle-shaped vegetable. The frying container may include the adjustment mechanism as described in the first embodiment.

In an embodiment, the compression is carried out so that the density of the fried mass of the noodle-shaped vegetable is 0.25 g/cm$^3$ to 1.0 g/cm$^3$, 0.27 g/cm$^3$ to 0.95 g/cm$^3$, or 0.3 g/cm$^3$ to 0.9 g/cm$^3$.

In an embodiment, regarding the position of the pressing means, as shown in FIG. 2, the ratio ($H_B/H_A$) of a height $H_B$ from the bottom surface of the retainer to the compression position B with respect to a height $H_A$ from the bottom surface of the retainer to the holding position A is determined appropriately according to the target product thickness of the noodle-shaped fried vegetable food product and the area of the bottom surface of the retainer, and can be, for example, 3% to 20%, 5% to 15%, or 7% to 13%.

The compression can be started within 240 seconds after the completion of the frying, preferably within 180 seconds, and more preferably within 120 seconds. As a result, the noodle-shaped vegetable is compressed while maintaining its flexibility at high temperatures, whereby damage to the noodle-shaped vegetable can be suppressed.

After the completion of the frying, the compression is preferably started in a state in which the temperature of the noodle-shaped vegetable is 105°C or higher, preferably 120°C or higher, and more preferably 140°C or higher. As a result, the noodle-shaped vegetable is compressed while maintaining its flexibility at high temperatures, whereby damage to the noodle-shaped vegetable can be suppressed.

The compression can last for 5 minutes, 1 minute, 30 seconds, or 5 seconds. This ensures that the compressed shape of the fried mass of the noodle-shaped vegetable can be maintained at room temperature.

The compressed state is preferably maintained until the mass of the noodle-shaped vegetable is cooled to 80°C or lower, and preferably 60°C or lower. This makes it possible to more reliably maintain the compressed shape of the fried mass of the noodle-shaped vegetable at room temperature.

After frying the mass of the noodle-shaped vegetable, for example, excess oil may be removed (de-oiled) by a means, such as centrifugation, until the oil content of the mass of the noodle-shaped vegetable is 40% by mass or less, 35% by mass or less, or 30% by mass or less. De-oiling is preferably carried out after allowing the mass of the noodle-shaped vegetable to cool. By de-oiling after cooling, for example, it is possible to suppress deformation or collapse of the mass of noodle-shaped vegetable due to the centrifugation operation at the time of de-oiling. The cooling can be carried out until, for example, the temperature of the mass of the noodle-shaped vegetable is 80°C or lower, and preferably 60°C or lower.

After frying the mass of the noodle-shaped vegetable, the mass of the noodle-shaped vegetable may be contained in a cup container. As a result, a noodle-shaped fried vegetable food product contained in the cup container can be produced. The noodle-shaped fried vegetable food product contained in the cup container can be eaten as-is in the cup by adding hot water thereto and cooking therein. When the mass of the noodle-shaped vegetable is contained in a cup container, a seasoning, such as powdered soup, liquid soup, and seasoning oil, or a dried additive, such as meat, fish and shellfish, or vegetables, may be contained together. The seasoning and dried additive may be packaged.

After frying the mass of the noodle-shaped vegetable and before containing the mass of the noodle-shaped vegetable in a cup container, the mass of the noodle-shaped vegetable may be individually wrapped. Air trapped inside the individual wrapping or packaging can act as a cushioning to further prevent cracking of the fried noodle-shaped vegetable.

In an embodiment, the length of the fried noodle-shaped vegetable is 80 mm to 500 mm, 100 mm to 300 mm, or 120 mm to 250 mm, the width thereof is 1.0 mm to 15 mm, 1.5 mm to 12 mm, or 2.0 mm to 10 mm, and the thickness thereof is 0.8 mm to 5 mm, 1.0 mm to 4 mm, or 1.5 mm to 3 mm. By setting the length, width, and thickness of the fried noodle-shaped vegetable within the above ranges, a noodle-shaped fried vegetable food product which has the texture of noodles when reconstituted in hot water can be provided.

In an embodiment, the density of the fried mass of the noodle-shaped vegetable is 0.25 g/cm$^3$ or more, 0.27 g/cm$^3$ or more, or 0.3 g/cm$^3$ or more, and is 1.0 g/cm$^3$ or less, 0.95 g/cm$^3$ or less, or 0.9 g/cm$^3$ or less.

The fried mass of the noodle-shaped vegetable has a plan view shape similar to the bottom surface shape of the retainer, and has, for example, a substantially flat rectangular parallelepiped or a substantially disc shape. In an embodiment, the diagonal length of the flat rectangular parallelepiped or the diameter of the disc is 3 cm to 10 cm, 4 cm to 8 cm, or 5 cm to 7 cm. In an embodiment, the thickness of the flat rectangular parallelepiped or disc is 0.3 cm to 3 cm, or 0.4 cm to 2 cm.

The water content of the fried noodle-shaped vegetable can be 1% by mass to 10% by mass, and is preferably 1.5% by mass to 8% by mass, and more preferably 2% by mass to 5% by mass when measured by the dry weight method. Specifically, the water content of the fried noodle-shaped vegetable is calculated using the following formula based on the mass of the noodle-shaped vegetable before and after drying when 2 g of the noodle-shaped vegetable is dried in an electric dryer at 105°C for 2 hours:

$$\text{Water content (\% by mass)} = (\text{mass of noodle-shaped vegetable before drying} - \text{mass of noodle-shaped vegetable after drying}) / \text{mass of noodle-shaped vegetable before drying} \times 100$$

In an embodiment, the fried noodle-shaped vegetable does not have a fried material derived from dredging adhered thereto.

The noodle-shaped fried vegetable food product comprises the mass of the fried noodle-shaped vegetable. In an embodiment, the noodle-shaped fried vegetable food product is cooked to a state suitable for consumption by adding hot water. This cooking is also called reconstitution in hot water. The temperature of hot water is, for example, 70°C or higher, or 80°C or higher. By reconstituting the noodle-shaped fried vegetable food product in hot water, it can be eaten as noodles having the original texture of the vegetable.

The subject of the method of the present disclosure is not limited to noodle-shaped vegetables. For example, by applying the method of the present disclosure to a flake-like vegetable, a flake-like fried vegetable food product can be produced. For example, a method for producing a flake-like fried vegetable food product according to an embodiment comprises cutting a vegetable into a flake-like shape to form a flake-like vegetable, providing a frying container comprising a retainer, forming a mass of the flake-like vegetable by containing the flake-like vegetable in the retainer of the frying container, and frying the mass of the flake-like vegetable contained in the retainer, and further comprises compressing the mass of the flake-like vegetable during or immediately after frying of the mass of the flake-like vegetable. Examples of the flake-like vegetable include those obtained by thinly-slicing the above-mentioned vegetables, such as burdock, and those sliced into chips.

EXAMPLES

In the Examples below, specific embodiments of the present disclosure are exemplified. However, the present invention is not limited thereto. All parts and percentages are based on mass unless otherwise stated.

Frying Container

A frying container comprising the following retainer and pressing means was used. The retainer was an open-top square cylinder having a square bottom surface of 47 mm in length and 47 mm in width, a height of 100 mm, and a plurality of holes arranged at a pitch of 3 mm × 5 mm on the bottom surface. The pressing means was composed of a square plate having a length of 46 mm and a width of 46 mm and a rod attached to the center of the square plate, and the square plate had a plurality of holes arranged at a pitch of 3 mm × 5 mm.

Temperature of Noodle-Shaped Vegetable

The surface temperature of noodle-shaped vegetable was measured by a non-contact method using a waterproof handheld radiation thermometer IR-TE manufactured by CHINO Corporation. For confirmation, the surface temperature of noodle-shaped vegetable was also measured by a contact method using a waterproof digital food thermometer SK-250WP-II-K manufactured by SATO KEIRYOKI MFG. CO., LTD.

Compressed Product Thickness

The thickness of the cooled noodle-shaped fried vegetable product was measured.

Mass

The mass of the noodle-shaped fried vegetable food product was measured after the compressed product thickness measurement and after de-oiling.

Density

The density was calculated by the mass of the noodle-shaped fried vegetable food product / (length 47 mm × width 47 mm × compressed product thickness). The unit was g/cm$^3$.

Drop Test

The obtained noodle-shaped fried vegetable food product was placed in a cup container (paper/PE, diameter 103 mm × height 102 mm) and covered with a plastic holding lid. The noodle-shaped fried vegetable food product contained in a cup as an evaluation sample was placed in a cardboard box that can accommodate 12 cups, and additional dummy cups were placed in the box with the evaluation sample, whereby 12 cups were placed in the cardboard box. The bottom of the cup container was maintained downward, and the cardboard box was dropped twice from a height of 2 m to confirm the condition of the noodle-shaped fried vegetable food product. Noodle-shaped fried vegetable food products with no cracks or chips were considered satisfactory, and those with cracks or chips were considered unsatisfactory.

(1) Experiment 1 (Compression during frying) (Examples 1 and 2)

A noodle-shaped vegetable was prepared by cutting (slicing) burdock to 8 mm wide, 2 mm thick, and 120 mm long, boiling for 6 minutes, followed by dehydrating, and then immersion in an immersion treatment liquid (salt: 1% by mass, sorbitol 70% solution: 10% by mass with respect to the mass of the noodle-shaped vegetable after dehydration).
40 g of the noodle-shaped vegetable was contained in the retainer of the frying container, and fried for 3 minutes using palm oil (oil surface height: 80 mm) heated to 160°C, and then the position of the pressing means was adjusted so as to achieve the product heights shown in Table 1, and in a state in which the mass of the noodle-shaped vegetable was compressed, further frying was carried out for the time periods shown in Table 1. Thereafter, the mass was allowed to cool and de-oiled by centrifugation at approximately 500 rpm for 1 minute using a household hand-cranked vegetable drainer to obtain a noodle-shaped fried vegetable product. Regarding the frying time after compressing, since the lower the position of the pressing means, i.e., the deeper the pressing means is pushed closer to the bottom surface of the retainer, the longer it takes for frying to the center of the mass of the noodle-shaped vegetable (and conversely, the higher the position of the pressing means, the more likely burning is to occur), the frying time was adjusted so that the frying condition would be the same and the final water content after frying would be approximately 2%. No heating was carried out during frying, and the temperature of palm oil after frying was 145°C. The results are shown in Table 1.

[Table 1]

|  | Ex 1 | Ex 2 |
|---|---|---|
| Frying time after compression | 4 min 10 sec | 3 min 45 sec |
| Compressed product thickness (mm) | 10.0 | 14.7 |
| Mass (g) | 11.1 | 10.9 |
| Density (g/cm$^3$) | 0.50 | 0.34 |
| Drop test | Satisfactory | Satisfactory |

From Table 1, it can be understood that by compressing the mass of the noodle-shaped vegetable during frying, the thickness of the product can be reduced after compression to obtain a noodle-shaped fried vegetable food product having a high density, whereby the noodle-shaped fried vegetable food product can be prevented from cracking.

(2) Experiment 2 (Compression after frying) (Examples 3 and 4, and Comparative Example 1)

A noodle-shaped vegetable was prepared by the same procedure as Example 1. 40 g of the noodle-shaped vegetable was placed in the retainer of the frying container and fried in palm oil (oil surface height: 80 mm) heated to 160°C for 4 minutes. No heating was carried out during frying, and the temperature of palm oil after frying was 145°C.
After the completion of the frying, the noodle-shaped vegetable was removed from the oil bath and immediately after (cooling time 0) or after cooling for the time periods shown in Table 2, the retainer containing the mass of the noodle-shaped vegetable was placed on a scale, which was adjusted to zero point, and the mass of the noodle-shaped vegetable was compressed by the pressing means for 1 minute with a load indicating 3 kg on the scale. Thereafter, the mass was allowed to cool and de-oiled by centrifugation at approximately 500 rpm for 1 minute using a household hand-cranked vegetable drainer to obtain a noodle-shaped fried vegetable food product. The results are shown in Table 2.

Table 2]

|  | Ex 3 | Ex 4 | Comp Ex 1 |
|---|---|---|---|
| Cooling time | 0 min | 2 min | 16 min |
| Compression start temp (°C) | 145 | 120 | No Compression |
| Compressed product thickness (mm) | 9.6 | 15.3 | 49.9 |
| Mass (g) | 11.0 | 11.7 | 12.3 |
| Density (g/cm$^3$) | 0.52 | 0.35 | 0.11 |
| Drop test | Satisfactory | Satisfactory | Unsatisfactory |

From Table 2, it can be understood that by compressing the mass of the noodle-shaped vegetable immediately after the completion of the frying, the thickness of the product can be reduced after compression to obtain a noodle-shaped fried vegetable food product having a high density, whereby the noodle-shaped fried vegetable food product can be prevented from cracking. In particular, when the temperature of the noodle-shaped vegetable is 120°C or higher, the compressed product thickness can be made sufficiently thin and the density can be increased.

(3) Example 3 (Compression during frying) (Examples 5 and 6)

The test was carried out by the same procedure as Example 1 except that the step of immersing in the immersion treatment liquid of Example 1 was not carried out, and the compression during frying was compared. The results are shown in Table 3.

[Table 3]

|  | Ex 5 | Ex 6 |
|---|---|---|
| Frying time after compression | 4 min 20 sec | 3 min 30 sec |
| Compressed product thickness (mm) | 6.1 | 9.9 |
| Mass (g) | 8.9 | 9.0 |
| Density (g/cm$^3$) | 0.66 | 0.41 |
| Drop test | Satisfactory | Satisfactory |

It will be apparent to a person skilled in the art that the embodiments and Examples described above can be modified in various manners without departing from the basic principles of the present invention. It will also be apparent to a person skilled in the art that various improvements and modifications of the invention can be carried out without departing from the spirit and scope of the present invention.

DESCRIPTION OF REFERENCE SIGNS

1    mass of noodle-shaped vegetable
2    frying container
3    retainer
4    pressing means
5    oil bath
6    frying oil
A    holding position
B    compression position
$H_A$    holding position height
$H_B$    compression position height

**Claims**

1.  A method for producing a noodle-shaped fried vegetable food product, the method comprising:

    cutting a vegetable into a noodle shape to form a noodle-shaped vegetable,
    providing a frying container comprising a retainer,
    forming a mass of the noodle-shaped vegetable by containing the noodle-shaped vegetable in the retainer of the frying container, and
    frying the mass of the noodle-shaped vegetable contained in the retainer, the method further comprising:
    compressing the mass of the noodle-shaped vegetable during or immediately after frying of the mass of the noodle-shaped vegetable.

2.  The method according to claim 1, further comprising, prior to frying the mass of the noodle-shaped vegetable, immersing the noodle-shaped vegetable in an immersion treatment liquid comprising sugar and salt.

3.  The method according to claim 1 or 2, wherein the frying container further comprises a pressing means, the method further comprising compressing the mass of the noodle-shaped vegetable by the pressing means.

4.  The method according to any one of claims 1 to 3, further comprising, after frying the mass of the noodle-shaped vegetable, maintaining the mass of the noodle-shaped vegetable in a compressed state and cooling the mass of the noodle-shaped vegetable.

5.  The method according to any one of claims 1 to 4, wherein a length of the noodle-shaped vegetable prior to frying is 80 mm to 500 mm, a width thereof is 1.0 mm to 15 mm, and a thickness thereof is 0.8 mm to 5 mm.

6.  The method according to any one of claims 1 to 5, wherein the vegetable is a root vegetable.

7.  The method according to any one of claims 1 to 6, further comprising, after frying the mass of the noodle-shaped vegetable, containing the mass of the noodle-shaped vegetable in a cup container.

8.  The method according to claim 7, further comprising, after frying the mass of the noodle-shaped vegetable and before containing the mass of the noodle-shaped vegetable in the cup container, individually wrapping the mass of the noodle-shaped vegetable.

9.  The method according to any one of claims 1 to 8, further comprising, after containing the noodle-shaped vegetable in the retainer of the frying container and before frying the mass of the noodle-shaped vegetable, providing the mass of the noodle-shaped vegetable with one or more cavities penetrating the thickness direction of the mass of the noodle-shaped vegetable.

10. The method according to any one of claims 1 to 9, wherein the noodle-shaped fried vegetable food product is a food product which is cooked to a state suitable for consumption by adding hot water.

11. A noodle-shaped fried vegetable food product comprising a fried mass of a noodle-shaped vegetable, wherein a length of the noodle-shaped vegetable is 80 mm to 500 mm, a width thereof is 1.0 mm to 15 mm, and a thickness thereof is 0.8 mm to 5 mm, and a density of the mass of the noodle-shaped vegetable is 0.25 g/cm$^3$ to 1.0 g/cm$^3$.

12. The noodle-shaped fried vegetable food product according to claim 11, wherein the mass of the noodle-shaped vegetable has a substantially flat rectangular parallelepiped shape or substantially disc-like shape, the diagonal length of the flat rectangular parallelepiped shape or the diameter of the disc-like shape is 3 cm to 10 cm, and the thickness of the flat rectangular parallelepiped shape or disc-like shape is 0.3 cm to 3 cm.

13. The noodle-shaped fried vegetable food product according to claim 11 or 12, which is a food product which is cooked to a state suitable for consumption by adding hot water.

14. A method for producing a flake-like fried vegetable food product, the method comprising:

    cutting a vegetable into a flake-like shape to form a flake-like vegetable,
    providing a frying container comprising a retainer,

forming a mass of the flake-like vegetable by containing the flake-like vegetable in the retainer of the frying container, and

frying the mass of the flake-like vegetable contained in the retainer, the method further comprising:

compressing the mass of the flake-like vegetable during or immediately after frying of the mass of the flake-like vegetable.

# FIG. 1

# FIG. 2

## INTERNATIONAL SEARCH REPORT

International application No.

PCT/JP2020/035845

### A. CLASSIFICATION OF SUBJECT MATTER
Int.Cl. A23L19/00(2016.01)i, A23B7/005(2006.01)i
FI: A23L19/00A, A23B7/005, A23L19/00Z

According to International Patent Classification (IPC) or to both national classification and IPC

### B. FIELDS SEARCHED

Minimum documentation searched (classification system followed by classification symbols)
Int.Cl. A23L19/00, A23B7/005

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
JSTPlus/JMEDPlus/JST7580(JDreamIII), CAplus/FSTA/WPIDS(STN), Mintel GNPD

### C. DOCUMENTS CONSIDERED TO BE RELEVANT

| Category* | Citation of document, with indication, where appropriate, of the relevant passages | Relevant to claim No. |
|---|---|---|
| X<br>A | JP 2016-032442 A (NIPPON SUISAN KAISHA LTD.) 10 March 2016 (2016-03-10), claims, paragraph [0011] | 11-13<br>1-10, 14 |
| A | JP 57-022652 A (EHIME PREFECTURE) 05 February 1982 (1982-02-05) | 1-14 |
| A | JP 57-502102 A (KAROFF ROBERT BRUCE) 02 December 1982 (1982-12-02) | 1-14 |
| A | JP 4-299956 A (TOYO SUISAN KAISHA LTD.) 23 October 1992 (1992-10-23) | 1-14 |
| A | JP 2002-521013 A (BYRAN AUSTRALIA PEATY WYE LIMITED) 16 July 2002 (2002-07-16) | 1-14 |

☒ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>06 November 2020 | Date of mailing of the international search report<br>24 November 2020 |
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2020/035845

C (Continuation).   DOCUMENTS CONSIDERED TO BE RELEVANT

| Category* | Citation of document, with indication, where appropriate, of the relevant passages | Relevant to claim No. |
|---|---|---|
| A | 野菜を麺状にカットした"ベジヌードル"を使った新感覚サラダ，電子レンジで作る「ベジパスタ」2種新発売~2016 年 9 月 1 日(木)から関東エリア限定販売~, News Release, Salad Club News, 16-no. 18-1, 29 August 2016, [retrieved on: 6 November 2020], entire text, all drawings, non-official translation (New sensation salad using "vegetable noodles" cut from vegetables, 2 kinds of "vegetable pasta" made with microwave oven new release ~ Kanto area limited sale from 01 September 2016 (Thursday) ~) | 1-14 |
| A | 麺状にカットした野菜で主食の半分置き換えを提案，「ベジタブル麺」3 種新発売 ~10 月 31 日(水) から販売開始~, News Release, Salad Club News, no. 19, 19 October 2018, [retrieved on: 6 November 2020], entire text, all drawings, non-official translation (Proposed to replace half of the staple food with vegetables cut into a sardine, 3 new types of "vegetable sardines" will be on sale ~ Started selling from 31 October (Wednesday)) | 1-14 |
| A | Food, La moda de los espaguetis de calabacin sigue en auge, [online], 27 December 2017, <https://www.foodretail.es/food/espaguetis-calabacin-mercardona-vegetarianos_0_1176782314.html>, [retrieved on: 6 November 2020], entire text, all drawings | 1-14 |
| A | JP 2014-140333 A (NISSIN FOODS HOLDINGS CO., LTD.) 07 August 2014 (2014-08-07) | 1-14 |
| A | WO 2019/044915 A1 (NISSIN FOODS HOLDINGS CO., LTD.) 07 March 2019 (2019-03-07) | 1-14 |

Form PCT/ISA/210 (second sheet) (January 2015)

**INTERNATIONAL SEARCH REPORT**
Information on patent family members

International application No.

PCT/JP2020/035845

| | | |
|---|---|---|
| JP 2016-032442 A | 10 March 2016 | (Family: none) |
| JP 57-022652 A | 05 February 1982 | (Family: none) |
| JP 57-502102 A | 02 December 1982 | GB 2099279 A<br>WO 1982/001808 A1<br>DE 3152559 A |
| JP 4-299956 A | 23 October 1992 | (Family: none) |
| JP 2002-521013 A | 16 July 2002 | US 7014879 B1<br>WO 2000/004786 A1<br>EP 1104246 A |
| JP 2014-140333 A | 07 August 2014 | (Family: none) |
| WO 2019/044915 A1 | 07 March 2019 | (Family: none) |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2016032442 A